# EUROPÄISCHE PATENTSCHRIFT

(11) **EP 3 412 402 B1**
(45) Veröffentlichungstag und Bekanntmachung des Hinweises auf die Patenterteilung: **16.10.2019**
(21) Anmeldenummer: 18172545.8
(22) Anmeldetag: 16.05.2018
(51) Int. Cl.: B23P 19/08, B23P 19/00

(54) **TECHNIK ZUR BEFÜLLUNG EINES BESTÜCKUNGSAUTOMATEN**
TECHNIQUE FOR FILLING AN AUTOMATIC COMPONENT PLACEMENT MACHINE
TECHNIQUE DE REMPLISSAGE D'UN DISPOSITIF AUTOMATIQUE DE PLACEMENT DE COMPOSANTS

(30) Priorität: 06.06.2017 DE 102017112420
(43) Veröffentlichungstag der Anmeldung: 12.12.2018
(73) Patentinhaber: MAN Truck & Bus SE, 80995 München (DE)
(72) Erfinder: Astorino, Giovanni, 90429 Nürnberg (DE)
(74) Vertreter: v. Bezold & Partner Patentanwälte - PartG mbB

(56) Entgegenhaltungen:
- DE-A1- 10 242 279
- DE-A1-102013 012 328
- JP-A- 2006 043 828
- JP-A- 2006 043 832

## Beschreibung

Die vorliegende Erfindung betrifft eine Technik zur Befüllung eines Bestückungsautomaten mit Kolbenringen. Insbesondere sind eine Vorrichtung und ein Verfahren zur Befüllung eines Bestückungsautomaten beschrieben, der zur Bestückung eines Kolbens für eine Brennkraftmaschine mit Kolbenringen ausgebildet ist.

Kolbenringe zur Bestückung eines Kolbens werden gestapelt und in einer Papierummantelung eingefasst geliefert. Zur Bestückung des Kolbens einer Brennkraftmaschine mit Kolbenringen stehen Bestückungsautomaten zur Verfügung.

Die JP 2006 043832 A offenbart eine Vorrichtung und ein Verfahren zur Befüllung eines Bestückungsautomaten zur Bestückung eines Kolbens einer Brennkraftmaschine mit Kolbenringen.

Herkömmlicherweise müssten die Kolbenringe von Hand und portionsweise in kleineren, noch mit der Hand zu erfassenden Mengen aus der Verpackung in eine Zuführungseinrichtung des Kolbenringbestückungsautomaten eingelegt werden. Dabei ist darauf zu achten, dass die Kolbenringe in axialer und radialer Richtung richtig eingelegt werden. Die Aussparung der Kolbenringe folgt dabei einem Dorn in der Zuführungseinrichtung. Die Ausrichtung der Kolbenringe hinsichtlich Ober-/Unterseite wird durch eine nahe einem Öffnungsende der Ausnehmung angebrachte farbige Markierung auf den Kolbenringen festgelegt. Problematisch sind dabei das lagerichtige Einlegen der Kolbenringe, die Dauer des Befüllvorganges und eine mögliche Verletzungsgefahr beim Einlegen. Anfangs der manuellen Befüllung muss tief in die Zuführungseinrichtung eingegriffen werden muss, wodurch Verletzungsgefahr an scharfen Kanten und an weit herausragenden Führungszinken der Zuführungseinrichtung besteht. Darüber hinaus können sich die Kolbenringe beim portionsweisen Einlegen relativ zu einander verdrehen und an dem Dorn der Zuführungseinrichtung verkanten.

Es ist somit Aufgabe der vorliegenden Erfindung, eine Technik zum schnellen und ergonomischen Befüllen eines Bestückungsautomaten mit Kolbenringen anzugeben.

Diese Aufgabe wird durch eine Vorrichtung und ein Verfahren mit den Merkmalen bzw. Schritten der unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem Aspekt ist eine Vorrichtung zur Befüllung eines Bestückungsautomaten zur Bestückung eines Kolbens einer Brennkraftmaschine mit Kolbenringen bereitgestellt. Die Vorrichtung umfasst einen zylindrischen Grundkörper mit einer Mantelfläche, einer oberen Stirnseite und einer der oberen Stirnseite gegenüberliegenden unteren Stirnseite. Ein Durchmesser der Mantelfläche ist kleiner als ein Innendurchmesser der Kolbenringe zur Aufnahme von der oberen Stirnseite zugeführten, koaxial gestapelten Kolbenringen entlang der Längsrichtung des zylindrischen Grundkörpers. In der Mantelfläche erstreckt sich in axialer Richtung des zylindrischen Grundkörpers eine Nut zur verdrehsicheren Aufnahme eines in einer Zuführungseinrichtung des Bestückungsautomaten angeordneten Dorns. Ferner umfasst die Vorrichtung mindestens einen Steg, der in radialer Richtung zum zylindrischen Grundkörper beweglich ist zwischen einer Beladungsstellung und einer Entladungsstellung, wobei der mindestens eine Steg in der Beladungsstellung über die Mantelfläche radial auskragt mit einer Rückhaltefläche, an der die koaxial gestapelten Kolbenringe anliegen oder in Anlage bringbar sind, und wobei in der Entladungsstellung die Rückhaltefläche radial innerhalb der Mantelfläche angeordnet ist.

Indem in der Beladungsstellung der auskragende Steg oder die auskragenden Stege eine Rückhaltefläche bildet, an der die koaxial gestapelten Kolbenringe anliegen, kann eine Vielzahl an Kolbenringen aufgenommen werden. Die Anzahl der in einem Arbeitsschritt durch die Vorrichtung aufnehmbaren Kolbenringe muss nicht länger durch die Spannweiter eine Hand bestimmt sein. Beispielsweise kann eine axiale Länge des Grundkörpers die Anzahl der in einem Arbeitsschritt aufnehmbaren Kolbenringe bestimmen.

Statt einzelne greifbare Portionen unter Verletzungsgefahr in die Zuführungseinrichtung einzusetzen, kann ein Stapel Kolbenringe im vollen ursprünglich abgepackten Umfang in der Vorrichtung angeordnet und in einem Arbeitsschritt in die Zuführungseinrichtung eingesetzt werden, ohne das manuell in die Zuführungseinrichtung eingegriffen werden muss.

Vorteilhafterweise können dazu Haltegriffe an der oberen Stirnseite angeordnet sein, so dass die die Haltegriffe fassende Hand oberhalb einer Öffnung der Zuführungseinrichtung bleibt, in welche nur die Vorrichtung eingebracht wird.

Indem die Rückhaltefläche in der Entladungsstellung radial innerhalb der Mantelfläche angeordnet ist, ist eine Bewegung der koaxial gestapelten Kolbenringe in axialer Richtung von der oberen Stirnseite zur unteren Stirnseite freigegeben. Unter Einfluss der Schwerkraft der Kolbenringe können diese in der Entladungsstellung über die untere Stirnseite die Vorrichtung verlassen.

Der mindestens eine Steg kann in axialer Richtung näher zur unteren Stirnseite als zur oberen Stirnseite angeordnet sein. Dadurch kann ein Großteil oder die gesamte axiale Länge des zylindrischen Grundkörpers zur Beladung mit Kolbenringen bereitstehen. Beispielsweise können zwei oder mehr Stege jeweils innenseitig im Grundkörper an der unteren Stirnseite in Anlage gebracht und symmetrisch zur Zylinderachse angeordnet sein.

Jeder Steg kann mit jeweils einem Endspannelement gekoppelt sein, das sich in einem unteren Bereich der Mantelfläche in axialer Richtung erstreckt. Das oder jedes Endspannelement kann durch einen Spalt in der Mantelfläche radial beweglich sein.

In der Entladungsstellung kann das oder jedes Endspannelement radial innerhalb der Mantelfläche angeordnet sein. In der Beladungsstellung kann das oder jedes Endspannelement aus der Mantelfläche hervorstehen und ein Endquermaß bestimmen, das gleich oder größer als der Innendurchmesser der Kolbenringe ist, beispielsweise zur verdrehsicheren Aufnahme der Kolbenringe im unteren Bereich. Mindestens zwei Endspannelemente können symmetrisch zur Zylinderachse angeordnet sein, beispielsweise zur Zentrierung der aufgenommen Kolbenringe. Endspannelemente können auch als Zentrierschienen bezeichnet werden.

Beispielsweise kann in der Beladungsstellung eine radial nach außen wirkende Vorspannung der Endspannelemente einen Kraftschluss mit den Kolbenringen im unteren Bereich bewirken. Das Endspannelement kann mit dem jeweiligen Steg integral-einstückig ausgebildet sein. Alternativ oder ergänzend kann das Endspannelement rechtwinklig zur Rückhaltefläche sein.

An der oberen Stirnseite kann ein Bedienelement angeordnet sein. Das Bedienelement kann mit dem mindestens einen Steg (beispielsweise elektrisch, mechanisch oder hydraulisch) gekoppelt sein, um die Bewegung des Stegs zwischen der Beladungsstellung und der Entladungsstellung zu bewirken.

Das Bedienelement kann einen Drehknauf umfassen. Eine erste Drehstellung des Bedienelements kann der Beladungsstellung entsprechen. Eine zweite Drehstellung des Bedienelements kann der Entladungsstellung entsprechen.

Innerhalb des Grundkörpers kann eine in Längsrichtung (beispielsweise koaxial mit der Zylinderachse) verlaufende Welle angeordnet sein. Der Drehknauf kann über die Welle mit einem Umsetzer (beispielsweise einem Exzenter oder einem Bauteil mit diskreter Rotationssymmetrie um die Welle) zur gemeinsamen Drehung drehfest gekoppelt sein. Der Umsetzer kann mit dem mindestens einen Steg in Wirkverbindung stehen zur Radialbewegung des Stegs zwischen der Beladungsstellung und der Entladungsstellung.

In einer Ausführungsform können Steg und Umsetzer über einen exzentrisch gelagerten Bolzen in Wirkverbindung stehen. In einer weiteren Ausführungsform kann eine radial innenseitige Kante des Stegs an einer die Längsachse umlaufenden Gleitfläche des Umsetzers anliegen. Der mindestens eine Steg kann in radialer Richtung nach innen vorgespannt sein.

Der Umsetzer kann eine erste umlaufende Gleitfläche mit einem ersten radialen Hub (z. B. eine erste Differenz zwischen einem Minimum des Radius und einem Maximum des Radius, insbesondere einer ersten Exzentrizität) aufweisen, der einem ersten Überstand der Rückhaltefläche bezüglich der Mantelfläche (auch: radiale Auskragung) in der Beladungsstellung entspricht. Ferner kann der Umsetzer eine zweite umlaufende Gleitfläche mit einem zweiten radialen Hub (z. B. eine zweite Differenz zwischen einem Minimum des Radius und einem Maximum des Radius, insbesondere einer zweiten Exzentrizität) aufweisen, der einem zweiten Überstand der Rückhaltefläche bezüglich der Mantelfläche in der Beladungsstellung entspricht. Der zweite Überstand kann größer sein als der erste Überstand, beispielsweise zur zentrierten Aufnahme von Kolbenringen mit unterschiedlichen Durchmessern.

Alternativ, ergänzend oder in Einheit mit dem Drehknauf kann das Bedienelement einen Hebel (z. B. einen exzentrisch gelagerten Kipphebel) oder einen Zugknauf umfassen, der den mindestens einen Steg (beispielsweise durch axiale Bewegung zwischen einer ersten axialen Position und einer zweiten axialen Position) wahlweise mit der ersten Gleitfläche und der zweiten Gleitfläche in Wirkverbindung bringt. So kann der Überstand des Stegs und/oder das Endquermaß in der Beladungsstellung an einen Durchmesser (beispielsweise einen Außendurchmesser bzw. einen Innendurchmesser) der Kolbenringe angepasst werden. Dieselbe Vorrichtung kann zur Bestückung mit unterschiedlichen Kolbenringen eingesetzt werden.

Ferner kann die Vorrichtung ein Spannelement umfassen, das sich in axialer Richtung entlang der Mantelfläche (zumindest teilweise, vorzugsweise über die gesamte axiale Länge) zwischen oberer Stirnseite und unterer Stirnseite erstreckt. Das Spannelement kann in einer eingefahrenen Stellung (beispielsweise einer Arretierstellung) radial innerhalb der Mantelfläche angeordnet (beispielsweise lösbar arretiert) sein. Das Spannelement kann in einer ausgefahrenen Stellung (beispielsweise einer Losstellung) aus der Mantelfläche hervorstehen.

Das Spannelement kann in einem zur axialen Richtung parallelen Längsschlitz in der Mantelfläche radial beweglich angeordnet sein. Alternativ oder in Kombination kann das Spannelement radial nach außen vorgespannt sein. Beispielsweise kann das Spannelement in der Losstellung an einem Anschlag innerhalb des Grundkörpers anliegen. In der Losstellung kann die Vorspannung das Spannelement (zumindest teilweise) aus der Mantelfläche drücken. Alternativ oder ergänzend kann das Spannelement in der Losstellung ein Quermaß der Vorrichtung bestimmen, das größer als der Durchmesser der Mantelfläche ist.

In einer ersten Variante kann die Losstellung ein Quermaß aufweisen, das gleich (oder geringfügig kleiner) als der Innendurchmesser der aufgenommenen oder aufzunehmenden Kolbenringe ist. Durch die Losstellung kann das Quermaß der Vorrichtung wahlweise an einen Innendurchmesser der Kolbenringe angepasst werden, der größer der Durchmesser der Mantelfläche ist. Beispielsweise kann der Innendurchmesser der für Kolbenringe größer oder wesentlich größer als der Durchmesser der Mantelfläche sein. Dadurch kann bei Aufnahme solcher Kolbenringe ein Spiel zwischen Mantelfläche und Kolbenringen verringert werden. Solche Kolbenringe können in der Losstellung des Spannelements aufgenommen werden.

In einer zweiten Variante kann das Spannelement in der ausgefahrenen Stellung aufgrund der Vorspannung eine kraftschlüssige Verbindung zwischen dem Spannelement und den aufgenommenen Kolbenringen bewirken, beispielsweise für Kolbenringe, deren Innendurchmesser im Wesentlichen gleich oder geringfügig größer als der Durchmesser der Mantelfläche ist. Durch das Quermaß und/oder die Vorspannung kann in der ausgefahrenen Stellung eine kraftschlüssige Verdrehsicherung der Kolbenringe erreicht sein. In der eingefahrenen Stellung kann das Spannelement die kraftschlüssige Verbindung zu den Kolbenringen freigeben. Die Kolbenringe können in der eingefahrenen Stellung aufgenommen werden und in der ausgefahrenen Stellung gesichert sein.

Das Spannelement kann bezüglich des zylindrischen Grundkörpers diametral gegenüber der Nut angeordnet sein. Dadurch kann die Vorspannung des Spannelements ferner den Dorn mit einem Nutgrund der Nut kraftschlüssig verbinden, beispielsweise ohne Reibung oder ein Verhacken des Dorns an den Nutwangen der Nut zu verursachen.

Ferner kann die Vorrichtung mindestens einen Dauermagneten umfassen, der im Grundkörper zwischen einer ersten Stellung und einer radial außerhalb der ersten Stellung liegenden zweiten Stellung (zumindest in radialer Richtung) beweglich angeordnet ist. Eine vom Dauermagneten verursachte magnetische Flussdichte an der Mantelfläche in der zweiten Stellung kann größer sein als in der ersten Stellung. Die größere magnetische Flussdichte kann in der zweiten Stellung eine kraftschlüssige (insbesondere reibschlüssige) Verbindung zwischen den Kolbenringen und der Mantelfläche bewirken. Dadurch kann nach Aufnahme der Kolbenringe ein Spiel zwischen Mantelfläche und Kolbenringen eliminiert werden.

Ferner kann die Vorrichtung an der oberen Stirnseite einen schwenkbeweglich angeordneten Schuh umfassen. Der Schuh kann zwischen einer Schneideposition und einer Ruheposition schwenkbeweglich sein. Der Schuh kann eine Schneidklinge umfassen. Die Schneidklinge kann senkrecht zur Drehachse der Schwenkbewegung sein. In der Ruheposition kann die Schneidklinge unzugänglich verdeckt sein, beispielsweise zwischen dem Schuh und der oberen Stirnseite.

Beispielsweise kann die Schneidklinge in der Schneideposition parallel zur Längsachse des zylindrischen Grundkörpers sein. Alternativ oder ergänzend kann die Schneidklinge in der Ruheposition parallel zur Längsachse des zylindrischen Grundkörpers sein.

In der Schneideposition kann die Schneidklinge (beispielsweise an der oberen Stirnseite) in radialer Richtung über die Mantelfläche vorstehen. Alternativ oder ergänzend kann die Schneidklinge in der Schneideposition innerhalb der Nut oder in axialer Richtung über der Nut angeordnet sein.

An einer Nutwange oder beiden Nutwangen der Nut kann jeweils ein Anschlag radial nach außen über die Mantelfläche vorstehen. Der Anschlag oder die Anschläge können jeweils mit einem Stoßende des Kolbenrings (d. h. mit einem Öffnungsende der Ausnehmung des Kolbenrings) in Anlage stehen oder bringbar sein.

An der unteren Stirnseite kann mindestens ein Dauermagnet angeordnet sein. Der mindestens eine Dauermagnet kann einen Kraftschluss (insbesondere Reibschluss) zwischen der unteren Stirnseite der Vorrichtung und einer ferromagnetischen Standfläche bewirken, auf der die Vorrichtung zur Beladung mit den Kolbenringen abgestellt oder abstellbar ist. Dadurch kann die axiale Länge des Grundkörpers zum Vorteil einer größeren Ladekapazität erhöht werden, ohne an Standfestigkeit beim Beladen zu verlieren.

Gemäß einem weiteren Aspekt ist ein Verfahren zur Befüllung eines Bestückungsautomaten zur Bestückung eines Kolbens einer Brennkraftmaschine mit Kolbenringen bereitgestellt. Das Verfahren umfasst den Schritt des Zuführens eines Stapels von Kolbenringen von einer oberen Stirnseite eines zylindrischen Grundkörpers, so dass eine Mantelfläche des zylindrischen Grundkörpers innerhalb des Stapels (zumindest im Wesentlichen) koaxial mit den Kolbenringen angeordnet ist; den Schritt des Positionierens mindestens eines Stegs, der in radialer Richtung zum zylindrischen Grundkörper zwischen einer Beladungsstellung und einer Entladungsstellung beweglich ist, in der Beladungsstellung, in welcher der Steg mit einer Rückhaltefläche über die Mantelfläche radial auskragt, an welcher der Stapel koaxialer Kolbenringe anliegt; den Schritt des Einführens des zylindrischen Grundkörpers mit den daran koaxial gestapelten Kolbenringen in eine Zuführungseinrichtung des Bestückungsautomaten, wobei ein an der Zuführungseinrichtung angeordneter Dorn in axialer Richtung entlang einer Nut in der Mantelfläche läuft zur verdrehsicheren Aufnahme der Kolbenringe; und den Schritt des Bewegens des Stegs in die Entladungsstellung, in welcher die Rückhaltefläche des Stegs radial innerhalb der Mantelfläche angeordnet ist.

Die so bestückte Brennkraftmaschine kann ferner in ein Kraftfahrzeug, insbesondere ein Nutzfahrzeug, eingebaut werden.

Gemäß weiteren Aspekten der Erfindung sind eine Verwendung der Vorrichtung zur Befüllung eines Bestückungsautomaten und ein Herstellungsverfahren für ein Kraftfahrzeug, insbesondere ein Nutzfahrzeug, bereitgestellt.

Die Verwendung und die Verfahren können jeweils ein jedes Merkmal des Vorrichtungsaspekts und/oder einen dem Vorrichtungsmerkmal entsprechenden Verfahrensschritte umfassen.

Weitere Merkmale und Vorteile der Erfindung werden im Folgenden unter Bezugnahme auf die beigefügten Zeichnungen beschrieben. Es zeigen schematisch:
- Figur 1: eine perspektivische Darstellung eines ersten Ausführungsbeispiels einer Vorrichtung zur Befüllung mit Kolbenringen;
- Figur 2: einen Querschnitt durch einen zylindrischen Grundkörper einer ersten Weiterbildung der Vorrichtung mit darin aufgenommenen Kolbenringen;
- Figur 3: einen Ausschnitt eines Querschnitts durch einen zylindrischen Grundkörper einer zweiten Weiterbildung der Vorrichtung;
- Figuren 4 und 5: einen vertikalen Schnitt in einer Vorderansicht bzw. einen horizontalen Schnitt in einer Aufsicht eines zweiten Ausführungsbeispiels der Vorrichtung in einer Entladungsstellung;
- Figuren 6 und 7: den vertikalen Schnitt der Vorderansicht des zweiten Ausführungsbeispiels der Vorrichtung in einer Beladungsstellung mit einer ersten bzw. zweiten axialen Position;
- Figuren 8 und 9: einen vertikalen Schnitt in einer Seitenansicht des zweiten Ausführungsbeispiels der Vorrichtung mit einem Spannelement in einer Losstellung bzw. einer Arretierstellung; und
- Figuren 10 und 11: eine Untersicht des zweiten Ausführungsbeispiels der Vorrichtung in einer Entladungsstellung bzw. einer Beladungsstellung.

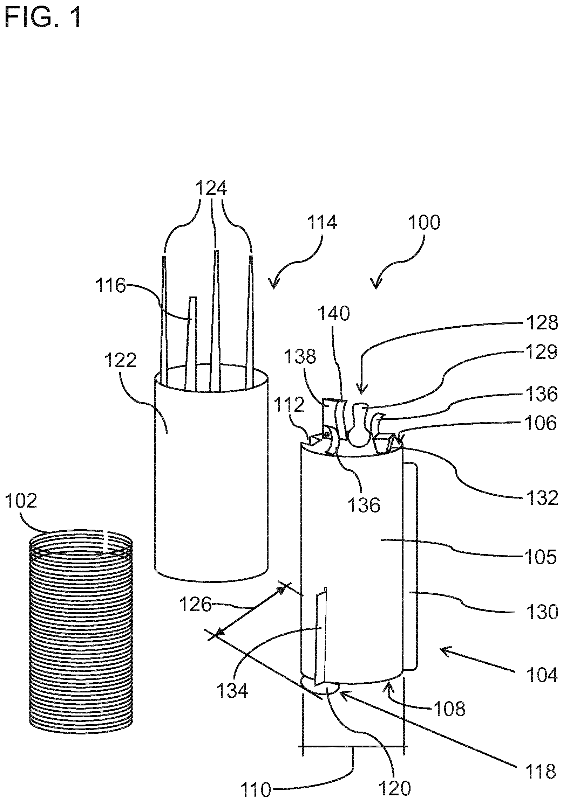

Figur 1 zeigt schematisch ein Ausführungsbeispiel einer allgemein mit Bezugszeichen 100 bezeichneten Vorrichtung zur Befüllung eine Bestückungsautomaten. Die Befüllung umfasst Kolbenringe 102 zur Bestückung an einem Kolben einer Brennkraftmaschine für ein Kraftfahrzeug, insbesondere eine Nutzfahrzug. Die Kolbenringe 102 können insbesondere Trapez-, Minuten- und/oder Dachfasenringe umfassen.

Die Vorrichtung 100 umfasst einen zylindrischen Grundkörper 104 mit einer Mantelfläche 105, einer oberen Stirnseite 106 und einer der oberen Stirnseite 106 gegenüberliegenden unteren Stirnseite 108. Ein Durchmesser 110 der Mantelfläche 105 ist gleich oder kleiner als ein Innendurchmesser der Kolbenringe 102 zur Aufnahme von der oberen Stirnseite 106 zugeführten, koaxial gestapelten Kolbenringen 102 entlang der Längsrichtung des zylindrischen Grundkörpers 104. In axialer Richtung des zylindrischen Grundkörpers 104 erstreckt sich eine Nut in der Mantelfläche 105 zur verdrehsicheren Aufnahme eines in einer Zuführungseinrichtung 114 des Bestückungsautomaten angeordneten Dorns 116. Die Vorrichtung 100 umfasst ferner mindestens einen Steg 118, der in radialer Richtung zum zylindrischen Grundkörper 104 beweglich ist zwischen einer Beladungsstellung und einer Entladungsstellung. Der mindestens eine Steg 118 kragt in der Beladungsstellung über die Mantelfläche 105 radial aus mit einer Rückhaltefläche 120, an der die koaxial gestapelten Kolbenringe 102 anliegen oder in Anlage bringbar sind. In der Entladungsstellung ist die Rückhaltefläche 120 radial innerhalb der Mantelfläche 105 angeordnet.

Die Vorrichtung 100 ist als eine Montagehilfe zum Befüllen von Kolbenringen in einen Bestückungsautomaten ausgebildet. Die Vorrichtung ermöglicht eine erleichterte und schnellere Befüllung des Automaten zum Bestücken von Kolben mit den Kolbenringen 102.

Die Figur 1 zeigt teilweise den Bestückungsautomat. Der Bestückungsautomat besitzt mindestens eine Zuführungseinrichtung 114 für die Kolbenringe 102. Jede Zuführungseinrichtung 114 umfasst eine rohrförmige Wandung 122 im unteren Bereich und daran angebrachte, sich über die Wandung hinaus erstreckende Zinken 124, welche die Position eines Stapels von Kolbenringen 102 radial begrenzen. Ferner ist in jeder Zuführungseinrichtung 114 der Dorn 116 vertikal angeordnet zur Führung der offenen Kolbenringe durch Eingriff in deren Aussparung (die den Ringstoß bildet).

Die Vorrichtung 100 ermöglicht, dass die Kolbenringe 102 in einem Arbeitsschritt in die Zuführungseinrichtung 114 eingelegt werden. Des Weiteren sinkt die Verletzungsgefahr deutlich, da die Vorrichtung 100 und keine Hand in die Zuführungseinrichtung 114 eingeführt wird.

Auch die Fehleranfälligkeit ist verringert. Es muss nur einmal beim Aufziehen der Kolbenringe 102 auf die Vorrichtung 100 darauf geachtet werden, in welcher horizontalen Lage die Kolbenringe 102 sich befinden.

Die Vorrichtung 100 umfasst den zylinderförmigen Grundkörper 104 zur innenseitigen Aufnahme von Kolbenringen 102. Der Durchmesser 110 des Grundkörpers 104 ist kleiner als der der aufzunehmenden Kolbenringe 102.

An der unteren Stirnseite 108, d. h. an einem unteren Ende der Vorrichtung 100, befindet sich mindestens ein radialbeweglicher Steg 118. Der Steg 118 ist, oder die Stege 118 sind jeweils, zwischen der in Figur 1 gezeigten Beladungsstellung und der Entladungsstellung in radialer Richtung (bezüglich der Zylinderform des Grundkörpers 104) verschiebbar gelagert. In der Beladungsstellung kragt der Steg 118 über die Manteloberfläche radial aus. Jeder Steg 118 bildet in der Beladungsstellung einen Überstand oder eine Rückhaltefläche 120 zur axialen Lastaufnahme der Gewichtskraft der Kolbenringe 102.

In der Beladungsstellung bestimmen der Steg 118 oder die Stege 118 ein äußeres Quermaß 126 der Vorrichtung 100, das mindestens so groß ist wie der äußeren Durchmesser der aufzunehmenden Kolbenringe 102. In der Beladungsstellung können die über den Grundkörper 104 gestapelten Kolbenringe 102 (zumindest temporär) auf dem Steg 118 oder den Stegen 118 aufliegend zurückgehalten werden gegen die in axialer Richtung wirkende Gewichtskraft der Kolbenringe 102.

In der Entladungsstellung ist ein äußeres Quermaß 110 der Vorrichtung 100 durch den Grundkörper 104 bestimmt. In einem Ausführungsbeispiel ist eine Position des Stegs 118 oder der Stege 118 in der Entladungsstellung radial innenliegend gegenüber der Mantelfläche 105 des Grundkörpers 104. Mit anderen Worten, das durch den Steg 118 oder die Stege 118 bestimmte Quermaß 126 ist ein radial kleineres Maß als der Durchmesser 110 des Grundkörpers 104 der Vorrichtung 100. In einer anderen Ausführungsform ist eine Außenkante des Stegs 118 oder sind Außenkanten der Stege 118 in der Entladungsstellung jeweils bündig mit der Mantelfläche 105.

In der Entladungsstellung gleiten die aufgenommen Kolbenringe 102, beispielsweise getrieben durch ihre Gewichtskraft, vom Grundkörper 104, vorbei an dem Steg 118 oder den Stegen 118. Die Kolbenringe 102 können so innerhalb der Zuführungseinrichtung 114 des Automaten verbleiben, während die Vorrichtung 100 vertikal nach oben aus der Zuführungseinrichtung 114 axial bewegt wird.

Durch Drehen eines mittig an einem oberen Ende des Grundkörpers angebrachten Bedienelements 128 können die zwei Stellungen des Stegs 118, die Beladungsstellung und die Entladungsstellung, betätigt werden. Das Bedienelement 128 umfasst beispielsweise einen Drehknauf 129 an der oberen Stirnseite 106, d. h. am oberen Ende des Grundkörpers 104. Der Drehknauf 129 ist mittels einer Welle mit einem Umsetzer (beispielsweise in der Form eines Paddels) im Bereich eines unteren Endes des Grundkörpers 104 zur Drehung verbunden.

Am Umsetzer liegen innenseitige Flanken jedes Steges 118 an und können durch Drehen des Knaufs 129 radial verschoben werden. Im Fall von zwei Stegen 118 (oder einer größeren geraden Anzahl an Stegen 118) sind diese vorzugsweise am Grundkörper 104 zueinander gegenüberliegend angeordnet.

Des Weiteren besitzt eine Teilmenge der Stege 118 oder jeder Steg 118 eine wenigstens zweistufige Verstellmöglichkeit zur Einstellung von zwei oder mehr unterschiedlichen Maximalradien oder durch den Steg 118 bestimmte Quermaße 126 (d. h. unterschiedlich lange Überhänge der Rückhaltefläche 120 über die Mantelfläche 105) in der Beladungsstellung. Hierzu weist der Umsetzer zwei unterschiedlich breite Flanken als Gleitflächen auf. Je nach axialer Lage des Umsetzers können so mindestens zwei unterschiedliche maximale Verfahrwege (für den Übergang zwischen der Beladungsstellung und der Entladungsstellung) oder Überhänge (in der Entladungsstellung) bestimmt werden. Durch das Bedienelement 128 ist der Drehknauf 129 und der über die Welle damit verbundene Umsetzer in axialer Richtung verschiebbar, so dass die zwei (oder mehr) Stufen des Überhangs einstellbar sind. Dies dient beispielsweise der Anpassung an unterschiedliche Beladungen mit unterschiedlichen Radien der Kolbenringe 102 und/oder unterschiedlichen Peripherien, wie beispielsweise kleineren Zuführungseinrichtungen 114.

Der Grundkörper 104 weist ein Spannelement 130 auf, beispielsweise zum Arretieren oder Zentrieren der Kolbenringe 102 in axialer und/oder radialer Richtung. Im in Figur 1 gezeigten ersten Ausführungsbeispiel ragt das Spannelement 130 über die nahezu gesamte Länge des Grundkörpers 104 radial aus der Mantelfläche 105 des Grundkörpers 104 hervor.

Das Spannelement 130 kann mittels eines weiteren Bedienelements 132 (beispielsweise einem weiteren Knauf oder Hebel), der sich an der oberen Stirnseite 106 am oberen Ende des Grundkörpers 104 befindet (oder in einer Variante mit demselben Bedienelement 128), betätigt werden. Insbesondere kann durch das weitere Bedienelement 132 eine Arretierung des Spannelements 130 gelöst werden.

In einer vorgespannten oder eingefahrenen Stellung (Arretierstellung) des Spannelements 130, welche den Durchmesser 110 des Grundkörpers 104 nicht vergrößert, ist das Spannelement 130 arretiert. Zum Erreichen einer entspannten oder ausgefahrenen Stellung (Losstellung) des Spannelements 130 wird das weitere Bedienelement 132 betätigt, dadurch die Arretierung des Spannelements 130 gelöst und selbiges durch die Vorspannung (beispielsweise von einer Feder) in radialer Richtung nach außen gedrückt.

Auf der in radialer Richtung gegenüberliegenden Seite des Spannelements 130 befindet sich die Nut 112, welche das Einführen der Vorrichtung 100 in die Zuführungseinrichtung 114 des Kolbenringbestückungsautomaten entlang des Dorns 116 erlaubt. Der Dorn 116 verhindert ein Verdrehen der Kolbenringe 102 in der Zuführungseinrichtung 114, indem der Dorn 116 in die Maulweite der Kolbenringe 102 eingreift.

Vorzugsweise werden beim Verfahren der zwei gegenüberliegenden Stege 118 auch zwei auf der Mantelfläche gegenüberliegende Endspannelemente 134 im unteren Bereich des Grundkörpers 104 verfahren. Durch die Position im unteren Bereich des Grundkörpers 104 wird der unterstes oder ein Teil der Kolbenringe 102 im unteren Bereich arretiert. Jedes Endspannelement 134 ist radial kleiner als der Steg 118, so dass das Endspannelement 134 an der inneren Kante des aufgenommenen Kolbenrings 102 anliegt. Bei einer umlaufenden Anordnung von mindestens zwei Endspannelementen 134 werden so die aufgenommenen Kolbenringe bezüglich der Zylinderachse des Grundkörpers 104 zentriert. Die Endspannelementen 134 werden auch als Zentrierschienen bezeichnet.

Jedes Endspannelement 134 ist mit jeweils einem der Stege 118 zur Radialbewegung gekoppelt. Beispielsweise ist das Endspannelement 134 am Steg 118 angeformt. Durch den Kraftschluss mit dem Endspannelement 134 ist der unterste Kolbenring 102 oder sind ein Teil der Kolbenringe 102 im unteren Bereich gegen Verdrehen und/oder Anheben in axialer Richtung gesichert beim Befüllen des Bestückungsautomaten.

An der oberen Stirnseite 106 des Grundkörpers 104 befinden sich zwei Haltelaschen 136, mit welchen die Vorrichtung 100 (insbesondere mit je einem Finger an jeder Haltelasche 136) aufgenommen und beispielsweise in der Zuführungseinrichtung 114 des Bestückungsautomaten, wahlweise durch Einhandbedienung, platziert werden kann.

Im in Figur 1 gezeigten Ausführungsbeispiel umfasst die Vorrichtung 100 ferner einen an einer Kante am oberen Endes des Grundkörpers 104, beispielsweise an der Schnittkante eines Nutgrunds der Nut 112 mit der Stirnseite 106 des Grundkörpers, angeordneten klappbaren Schuh 138 mit einer scharfen Kante oder Schneidklinge 140. Mittels des Schuhs 138 kann die regelmäßig aus Papier bestehende Umhüllung der Kolbenringe 102 ohne weiteres Einwirken aufgetrennt und anschließend leicht entfernt werden.

Der Schuh 138 ist zwischen einer Schneideposition und einer Ruheposition schwenkbeweglich. In der Schneideposition liegt der Schuh auf der Mantelfläche 105 des Grundkörpers 104 auf. In der Ruheposition liegt der Schuh auf der oberen Stirnseite 106 des Grundkörpers 104 auf.

Bei einem Verfahren zur Befüllung werden die Kolbenringe 102 zunächst zusammen mit der Verpackung, welche zuvor teils an einem Ende geöffnet wurde, über den zylinderförmigen Grundkörper 104 geschoben und die Verpackung anschließend gänzlich entfernt.

Der Steg 118 am unteren Ende des Grundkörpers 104 befindet sich in der Beladungsstellung, d. h. bei der gegenüber dem Durchmesser 110 vergrößerten Quermaß 126. Das Spannelement 130 befindet sich in der vorgespannten inneren Stellung (Losstellung). Die Kolbenringe 102 werden durch Anlage am Dorn 116 mit ihrer Ausnehmung entlang der Nut 112 im Grundkörper 104 ausgerichtet.

Durch das Betätigen des weiteren Bedienelements 132 zur Zentrierung der Kolbenringe 102 wird das Spannelement 130 aus der vorgespannten Losstellung gelöst und aufgrund der Vorspannung in die Arretierstellung (auch: Spannstellung) freigegeben. Das Spannelement 130 presst somit gegen die Kolbenringe 102 und verspannt diese mit dem Grundkörper 104.

Die Vorrichtung 100 kann mit den zwei Haltelaschen 136 an einem oberen Ende des Grundkörpers 104, beispielsweise an der oberen Stirnseite 106, aufgenommen und in die Zuführungseinrichtung 114 gesetzt werden. Dabei sind die Kolbenringe 102 gegen ein Verrutschen gesichert und das lagerichtige Einlegen in die Zuführungseinrichtung 114 ist gewährleistet.

Nach dem Einsetzten der Vorrichtung 100 in die Zuführungseinrichtung 114 wird durch Drehen des Bedienelements 128 zur Radialbewegung des Steges 118 oder der Stege 118, dieser bzw. diese in die Entladungsstellung gebracht. Die Vorrichtung 100 kann anschließend, ohne die Kolbenringe 102, aus der Zuführungseinrichtung 114 genommen werden.

In einer weiteren vorteilhaften Ausbildung der Vorrichtung 100 sind, alternativ oder ergänzend zum sich axial erstreckende Spannelement 130, ein oder mehrere Dauermagnete vorgesehen, welche in einem geeigneten Abstand zur den aufgenommenen Kolbenringen 102 eine genügend große Haltekraft mittels ihres statischen Magnetfelds zur Arretierung in Umfangsrichtung bewirken.

Optional sind der oder die Dauermagnete (beispielsweise mittels einer Mechanik analog zu der des Stegs 118) in zwei unterschiedlichen Stellungen radial verschiebbar. So ergeben sich zwei Stellungen, bei denen in einer radial maximalen ersten Stellung der oder die Dauermagnete so nah an die Wandung oder Mantelfläche 105 des Grundkörpers 104 herantreten, dass in Folge des statischen Magnetfelds eine ausreichend große Haltekraft gegenüber den Kolbenringen 102 bewirkt wird, um diese gegen Verdrehen zu arretieren. In einer in radialer Richtung innenliegenden zweiten Stellung werden die aufgenommenen Kolbenringe 102 freigegeben.

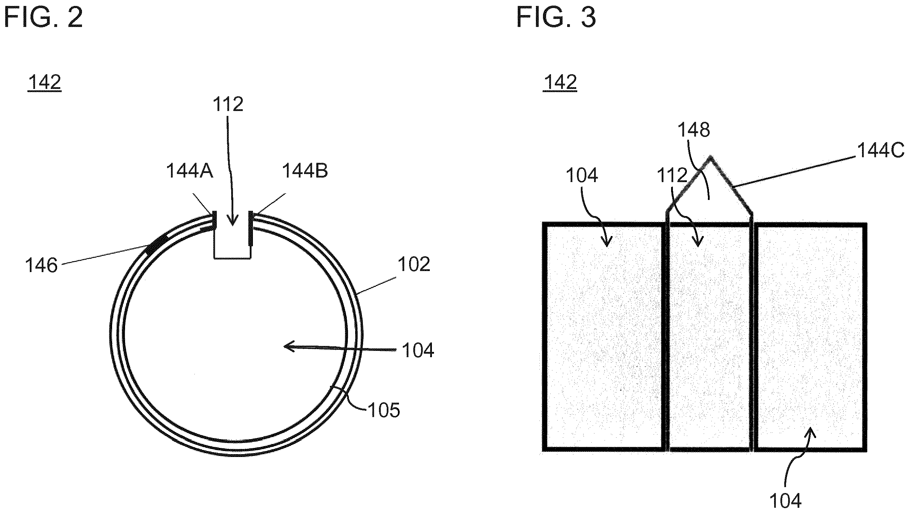

Die Figuren 2 und 3 zeigen schematische Querschnitte 142 durch die Vorrichtung 100 senkrecht zur Längsachse auf einer Höhe des Grundkörpers 104. Eine Farbmarkierung 146 kann die zur oberen Stirnseite 106 gerichtete Flanke des Kolbenrings 102 angeben.

Optional umfasst die Vorrichtung 100 einen oder mehrere Anschläge 144 an der Nut 112 des Grundkörpers 104 zur Ausrichtung der Kolbenringe 102. Vorzugsweise ist der Anschlag 144 an einer Seite der Nut 112 oder sind die Anschläge 144 an beiden Seiten der Nut 112 angeordnet.

Mit Bezugszeichen 144A, 144B und 114C sind Ausführungsbeispiele der Anschläge 144 gezeigt, die in jeder Kombination realisierbar sind.

In einem in Figur 2 gezeigten Ausführungsbeispiel steht eine Seite der Nut 112 oder stehen beide Seiten der Nut 112 (beispielsweise eine Nutwange oder beide Nutwangen) aus dem zylinderförmigen Grundkörpers 104 hervor. Beispielsweise umfasst jeder Anschlag 144 einen Vorsprung über die gesamte Länge des Grundkörpers 104. Der Vorsprung kann dünnwandigen sein. Beispielsweise ist eine Wanddicke des Vorsprungs klein im Vergleich zur Breite der Nut 112.

Alternativ oder ergänzend umfasst der Anschlag 144 eine Auskragung aus der Mantelfläche 105, deren Kontur (beispielsweise im Querschnitt 142 senkrecht zur Längsachse des Grundkörpers 104) einer Außenkontur des Dorns 116 in der Zuführungseinrichtung 114 entspricht. Der Dorn 116 ist in einem (beispielsweise durch den Anschlag 144 gebildeten) Hohlraum 148 aufnehmbar. Der Hohlraum 148 kann im Querschnitt 142 ein spitz zulaufendes Ende und zwei Flanken zu je einer Seite der Nut 112 im Grundkörper 104 aufweisen.

Der oder die Anschläge 144 weisen vorzugsweise ein Quermaß in radialer Richtung auf, welches kleiner als oder gleich dem maximal vergrößerten Quermaß 126 des Steges oder der Stege 118 in der Beladungsstellung ist.

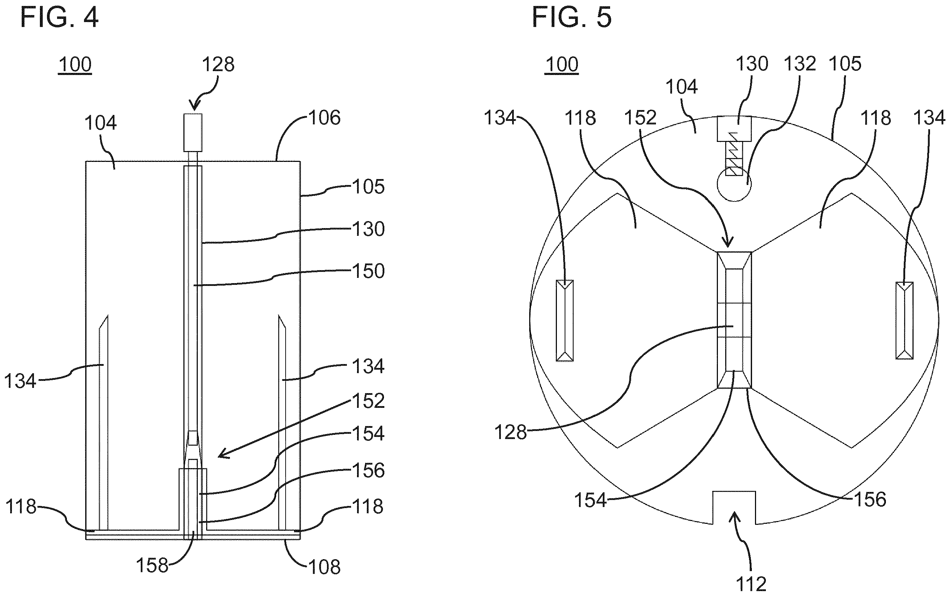

Die Figuren 4 und 5 zeigen eine schematische Schnittansicht von vorne bzw. eine schematische Schnittansicht von oben eines zweiten Ausführungsbeispiels der Vorrichtung 100, das mit dem ersten Ausführungsbeispiel kombinierbar ist. Insbesondere sind mit gleichen Bezugszeichen versehene Merkmale austauschbar.

Das Bedienelement 128 und der Umsetzer 152 sind über eine Welle 150 starr gekoppelt. Die Stege 118 liegen über vertikale Flanken am Umsetzer 152 an.

In der in den Figuren 4 und 5 in der Horizontalen gezeigten schmalen Querabmessung des Umsetzers 152 sind die Stege 118 innerhalb der Mantelfläche 105, d. h. in der Entladungsstellung. Senkrecht zur Bildebene der Figur 4 und in der Vertikalen der Figur 5 weist der Umsetzer 152 mindestens eine breite Querabmessung auf. Durch Drehung des Bedienelements und der damit verbundenen Drehung des Umsetzers um 90° werden die Stege 118 aufgrund der breiten Querabmessung radial nach außen in die Beladungsstellung bewegt. In dem gezeigten zweiten Ausführungsbeispiel umfasst der Umsetzer 152 zwei breite Querabmessungen an in axialer Richtung beabstandeten Abschnitten 154 und 156.

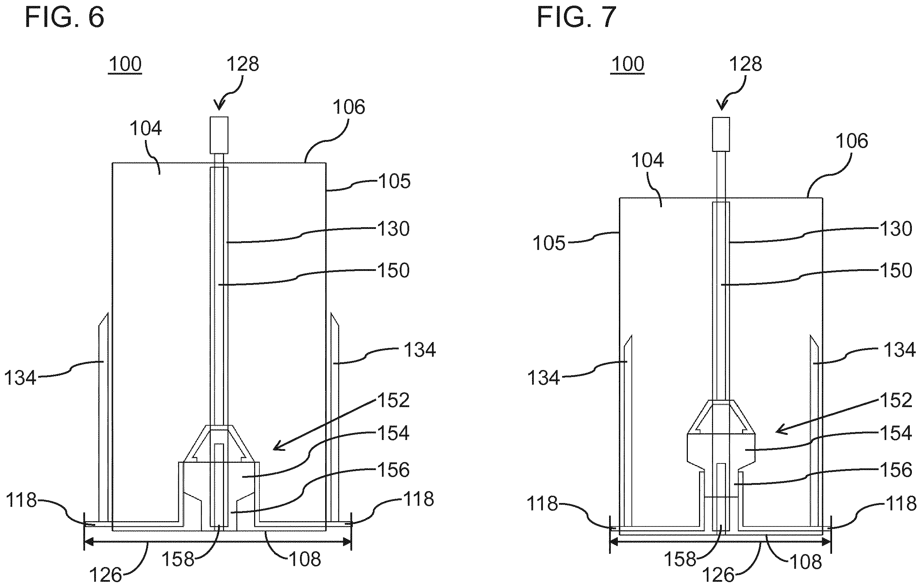

Die Figuren 6 und 7 zeigen schematisch in einer Vorderansicht das zweite Ausführungsbeispiel der Vorrichtung in der Beladungsstellung mit einer ersten bzw. zweiten axialen Position des Umsetzers 152. Durch Drücken des Bedienelements 128 zur oberen Stirnseite 106 wird der Umsetzer 152 in die in Figur 6 gezeigte erste axiale Position gebracht, in welcher der erste Abschnitt 154 mit seiner ersten breiten Querabmessung an den Stegen 118 anliegt.

Durch Ziehen des Bedienelements 128 weg von der oberen Stirnseite 106 wird der Umsetzer 152 in die in Figur 7 gezeigte zweite axiale Position gebracht. In der zweiten axialen Position liegt der zweite Abschnitt 156 des Umsetzers 152 mit seiner zweiten breiten Querabmessung an den Stegen 118 an.

Die zweite breite Querabmessung des zweiten Abschnitts 156 ist kleiner als die erste breite Querabmessung des ersten Abschnitts 154. Dadurch ist das Quermaß 126 der Beladungsstellung in der ersten axialen Position (Figur 6) größer als das Quermaß 126 der Beladungsstellung in der zweiten axialen Position (Figur 7).

Der Umsetzer 152 und/oder die den Umsetzer 152 tragende Welle 150 ist an der unteren Stirnfläche 108 auf einem Führungsbolzen 158 drehbar gelagert. Der Führungsbolzen 158 ist auf der Längsachse des zylindrischen Grundkörpers 104 angeordnet.

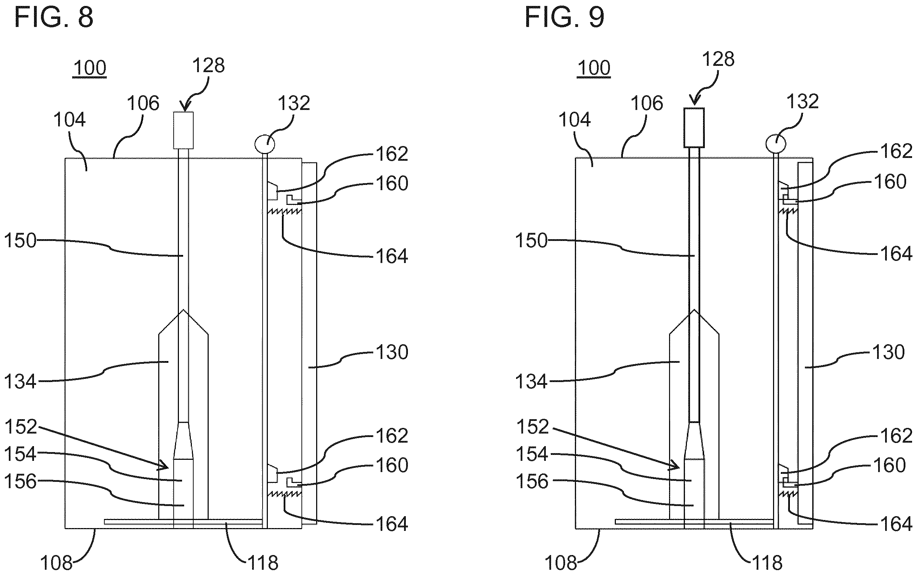

Die Figuren 8 und 9 zeigen in einem vertikalen Schnitt eine Seitenansicht des zweiten Ausführungsbeispiels der Vorrichtung 100. Die Perspektive der Figuren 8 und 9 ist gegenüber der Perspektive der Figuren 4, 6 und 7 um 90° gedreht.

Figur 8 zeigt eine Losstellung des Spannelements 130, in der ein Befestigungshaken 160 und eine Arretierung 162 voneinander getrennt sind. Aufgrund der Federspannung einer Feder 164 ragt das Spannelement 130 radial über die Mantelfläche 105 hinaus, so dass in der Losstellung Kolbenringe 102 mit einem ersten Innendurchmesser, der größer als der Durchmesser der Mantelfläche 105 ist, ohne oder im Wesentlichen ohne radiales Spiel in der Vorrichtung 100 aufnehmbar sind. Da das Spannelement 130 in der Losstellung den Abstand aufgenommener Kolbenringe 102 zur Mantelfläche 105 einseitig vergrößert und dadurch den effektiven Durchmesser der Vorrichtung 100 vergrößert, wird das Spannelement 130 auch als Abstandsschiene bezeichnet.

Figur 9 zeigt eine Arretierstellung des Spannelements 130, die zur Aufnahme von Kolbenringen 102 mit einem zweiten Innendurchmesser geeignet ist, der kleiner als der erste Innendurchmesser ist. Zum Erreichen der Arretierstellung wird das Spannelement radial in den Grundkörper 104 der Kolbenring-Befüllvorrichtung 100 gegen die Rückhaltefeder 164 händisch hineingedrückt. Dabei können durch Anheben des weiteren Bedienelements 132 die Befestigungshaken 160 in die Arretierungen 162 eingeführt und arretiert werden.

Zum Beladen der Kolbenring-Befüllvorrichtung 100 mit Kolbenringen 102 des zweiten Innendurchmessers wird im Positionierschritt das Bedienelement 128 in der Beladungsdrehstellung nach oben in die (in Figur 7 gezeigte) zweite axiale Position gezogen. Hierdurch wird der Umsetzer 152 in die obere Position gebracht und die Endspannelemente 134 werden durch Federkraft in die Befüllvorrichtung 100 gedrückt.

In der Beladungsstellung der zweiten axialen Position steht jeweils nur ein kleiner Teil des Steges 118 aus der Kolbenring-Befüllvorrichtung 100 heraus. Die überstehenden Rückhalteflächen 120 dienen zur Anlage eines Stapels mit Kolbenringen 102 des zweiten Innendurchmessers, der im Zuführschritt über den Grundkörper 104 gezogen wird. Dabei ist das Spannelement 130 in der Arretierstellung.

Im Schritt des Einführens in die Zuführeinrichtung 114 greift der Dorn 116 in die Führungsnut 112. Zum Entladen der Kolbenring-Befüllvorrichtung 100 wird im Schritt des Bewegens des Stegs 118 das Bedienelement 128 um 90° gedreht. Durch das Drehen des Bedienelements 128 wird der Umsetzer 152 in seine schmalste Drehstellung gebracht, so dass die Stege 118 entsprechend der schmalen Querabmessung komplett in die Kolbenring-Befüllvorrichtung 100 fahren diese entladen wird, wie in den Figuren 4 und 5 gezeigt.

Zum Beladen der Kolbenring-Befüllvorrichtung 100 mit Kolbenringen 102 des ersten Innendurchmessers wird das Bedienelement 128 nach unten in die erste axiale Position gedrückt. Hierdurch wird der Umsetzer 152 in die untere Position gebracht und die Endspannelemente 134 werden aus der Befüllvorrichtung 100 gedrückt. Die Rückhalteflächen 120 der Stege 118 stehen maximal aus der Befüllvorrichtung 100 heraus zur Aufnahme eines Stapels mit Kolbenringen 102 des ersten Innendurchmessers.

Das Spannelement 130 wird durch Anheben des weiteren Bedienelements 134 aufgrund der Federkraft der Feder 164 aus der Vorrichtung 100 herausgedrückt. Jetzt kann die Kolbenring-Befüllvorrichtung 100 mit den Kolbenringen 102 beladen werden. Neben einer definierten Zentrierung der Kolbenringe 102 kann das Spannelement 130 eine radiale Vorspannung auf die Kolbenringe 102 ausüben. Die radiale Vorspannung ist vorzugsweise so gering, dass ein schwerkraftgetriebenes Herabgleiten der Kolbenringe 102 in der Entladestellung nicht durch einen Reibschluss zwischen Spannelement 130 und Kolbenring 102 blockiert wird.

In einer mit jedem Ausführungsbeispiel kombinierbaren Weiterbildung sind ein oder mehrere Dauermagnete in der unteren Stirnseite 108 des Grundkörpers 104 angeordnet. Die Dauermagnete können die Standfähigkeit der Vorrichtung 100 auf ferromagnetischen Oberflächen verbessern, insbesondere im unbeladenen Zustand.

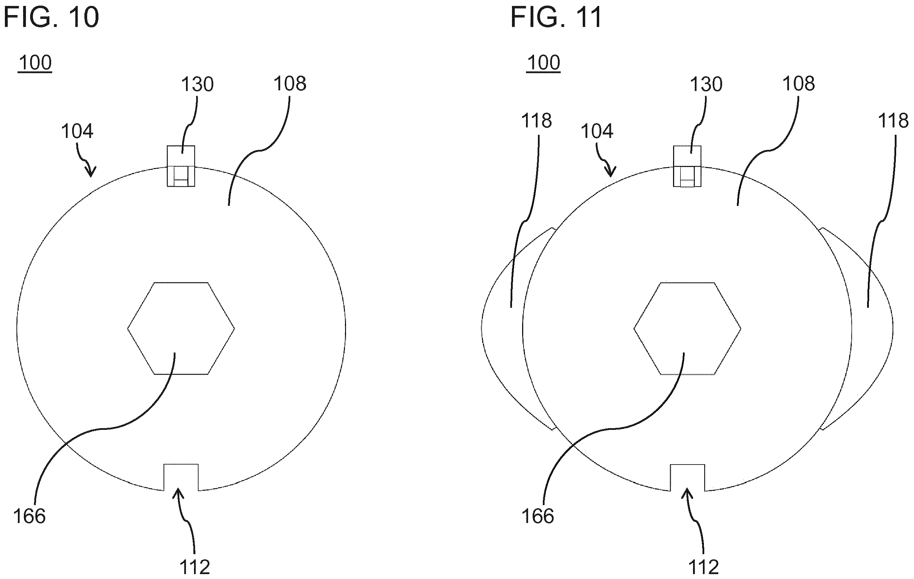

Die Figuren 10 und 11 zeigen eine schematische Untersicht der Vorrichtung 100 gemäß dem ersten oder zweiten Ausführungsbeispiel. An einer hexagonalen Polfläche eines Dauermagneten 166 tritt der magnetische Fluss (zumindest im Wesentlichen) senkrecht zur unteren Stirnseite 106 aus. Die Polfläche ist bündig mit der Stirnseite 106.

Obwohl die Erfindung in Bezug auf exemplarische Ausführungsbeispiel beschrieben worden ist, ist es für einen Fachmann ersichtlich, dass verschiedene Änderungen vorgenommen werden können und Äquivalente als Ersatz verwendet werden können. Ferner können viele Modifikationen vorgenommen werden, um eine bestimmte Situation oder ein bestimmtes Material an die Lehre der Erfindung anzupassen. Folglich ist die Erfindung nicht auf die offenbarten Ausführungsbeispiele beschränkt, sondern umfasst alle Ausführungsbeispiele, die in den Bereich der beigefügten Patentansprüche fallen.

### Bezugszeichenliste

- 100: Vorrichtung zur Kolbenringbefüllung
- 102: Kolbenring
- 104: Grundkörper
- 105: Mantelfläche
- 106: Obere Stirnseite
- 108: Untere Stirnseite
- 110: Durchmesser der Mantelfläche
- 112: Nut in der Mantelfläche
- 114: Zuführungseinrichtung
- 116: Dorn
- 118: Steg
- 120: Rückhaltefläche
- 122: Wandung
- 124: Zinken
- 126: Quermaß im Beladungsstellung
- 128: Bedienelement
- 129: Drehknauf
- 130: Spannelement
- 132: Weiteres Bedienelement
- 134: Endspannelement
- 136: Haltelasche
- 138: Schuh
- 140: Schneidklinge
- 142: Querschnitt durch Grundkörper
- 144: Anschlag
- 146: Farbmarkierung
- 148: Hohlraum
- 150: Welle
- 152: Umsetzer
- 154: Erster Abschnitt des Umsetzers
- 156: Zweiter Abschnitt des Umsetzers
- 158: Führungsbolzen
- 160: Befestigungshaken
- 162: Arretierung
- 164: Feder
- 166: Magnet

## Patentansprüche

1. Vorrichtung (100) zur Befüllung eines Bestückungsautomaten zur Bestückung eines Kolbens einer Brennkraftmaschine mit Kolbenringen (102), umfassend:
einen zylindrischen Grundkörper (104) mit einer Mantelfläche (105), einer oberen Stirnseite (106) und einer der oberen Stirnseite (106) gegenüberliegenden unteren Stirnseite (108), wobei ein Durchmesser (110) der Mantelfläche (105) kleiner als ein Innendurchmesser der Kolbenringe (102) ist zur Aufnahme von der oberen Stirnseite (106) zugeführten, koaxial gestapelten Kolbenringen (102) entlang einer Längsrichtung des zylindrischen Grundkörpers (104);
eine sich in axialer Richtung des zylindrischen Grundkörpers ersteckende Nut (112) in der Mantelfläche (105) zur verdrehsicheren Aufnahme eines in einer Zuführungseinrichtung (114) des Bestückungsautomaten angeordneten Dorns (116); und
mindestens einen Steg (118), der in radialer Richtung zum zylindrischen Grundkörper (104) beweglich ist zwischen einer Beladungsstellung und einer Entladungsstellung, wobei der mindestens eine Steg (118) in der Beladungsstellung über die Mantelfläche (105) radial auskragt mit einer Rückhaltefläche (120), an der die koaxial gestapelten Kolbenringe (102) anliegen oder in Anlage bringbar sind, und wobei in der Entladungsstellung die Rückhaltefläche (120) radial innerhalb der Mantelfläche (105) angeordnet ist.

2. Vorrichtung nach Anspruch 1, wobei der mindestens eine Steg (118) in axialer Richtung näher zur unteren Stirnseite (108) als zur oberen Stirnseite (106) angeordnet ist.

3. Vorrichtung nach Anspruch 2, wobei jeder Steg (118) mit jeweils einem Endspannelement (134) gekoppelt ist, das sich in einem unteren Bereich der Mantelfläche in axialer Richtung erstreckt, und das in der Entladungsstellung radial innerhalb der Mantelfläche angeordnet ist, und das in der Beladungsstellung aus der Mantelfläche hervorsteht und ein Endquermaß bestimmt, das gleich oder größer als der Innendurchmesser der Kolbenringe ist zur verdrehsicheren Aufnahme der Kolbenringe im unteren Bereich.

4. Vorrichtung nach einem der Ansprüche 1 bis 3, wobei an der oberen Stirnseite (106) ein Bedienelement (128) angeordnet ist, das mit dem mindestens einen Steg (118) gekoppelt ist, um die Bewegung des Stegs zwischen der Beladungsstellung und der Entladungsstellung zu bewirken.

5. Vorrichtung nach einem der Ansprüche 1 bis 4, wobei das Bedienelement (128) einen Drehknauf umfasst, der über eine innerhalb des Grundkörpers in Längsrichtung verlaufende Welle (150) mit einem Umsetzer (152) drehbeweglich gekoppelt ist, und wobei der Umsetzer (152) mit dem mindestens einen Steg (118) in Wirkverbindung steht zur Radialbewegung des Stegs zwischen der Beladungsstellung und der Entladungsstellung.

6. Vorrichtung nach einem der Anspruch 4 oder 5, wobei der mindestens eine Steg (118) in radialer Richtung nach innen vorgespannt ist und an einer die Längsachse umlaufenden Gleitfläche des Umsetzers (152) anliegt.

7. Vorrichtung nach Anspruch 5 oder 6, wobei der Umsetzer (152) eine erste umlaufende Gleitfläche mit einem ersten radialen Hub, der einem ersten Überstand der Rückhaltefläche (120) in der Beladungsstellung entspricht, und eine zweite umlaufende Gleitfläche mit einem zweiten radialen Hub, der einem zweiten Überstand der Rückhaltefläche (120) in der Beladungsstellung entspricht, aufweist, und wobei das Bedienelement (128) ferner einen Hebel umfasst, der den mindestens einen Steg (118) wahlweise mit der ersten Gleitfläche und der zweiten Gleitfläche in Wirkverbindung bringt.

8. Vorrichtung nach einem der Ansprüche 1 bis 7, ferner ein Spannelement (130) umfassend, das sich in axialer Richtung entlang der Mantelfläche zwischen oberer Stirnseite (106) und unterer Stirnseite (108) erstreckt, wobei das Spannelement in einer Losstellung radial innerhalb der Mantelfläche angeordnet ist, und das Spannelement in einer Losstellung aus der Mantelfläche (105) hervorsteht und ein Quermaß bestimmt, das gleich oder größer als der Innendurchmesser der aufgenommenen oder aufzunehmenden Kolbenringe ist zur verdrehsicheren Aufnahme der Kolbenringe.

9. Vorrichtung nach Anspruch 8, wobei das Spannelement (130) bezüglich des zylindrischen Grundkörpers (104) diametral gegenüber der Nut (112) angeordnet ist.

10. Vorrichtung nach einem der Ansprüche 1 bis 9, ferner mindestens einen Dauermagneten umfassend, der im Grundkörper (104) in radialer Richtung beweglich angeordnet ist zwischen einer ersten Stellung und einer radial außerhalb der ersten Stellung liegenden zweiten Stellung, wobei eine vom Dauermagneten verursachte magnetische Flussdichte an der Mantelfläche (105) in der zweiten Stellung größer ist als in der ersten Stellung und eine kraftschlüssige Verbindung zwischen den Kolbenringen und der Mantelfläche zu bewirken vermag.

11. Vorrichtung nach einem der Ansprüche 1 bis 10, ferner einen an der oberen Stirnseite (106) zwischen einer Schneideposition und einer Ruheposition schwenkbeweglich angeordneten Schuh (138) umfassend, wobei der Schuh eine Schneidklinge (140) umfasst, die in der Ruheposition unzugänglich verdeckt ist und in der Schneideposition an der oberen Stirnseite in radialer Richtung über die Mantelfläche (105) vorsteht.

12. Vorrichtung nach Anspruch 11, wobei die Schneidklinge (140) in der Schneideposition innerhalb der Nut (112) oder in axialer Richtung über der Nut angeordnet ist.

13. Vorrichtung nach einem der Ansprüche 1 bis 12, wobei an einer Nutwange oder beiden Nutwangen der Nut (112) jeweils ein Anschlag (144A; 144B; 144C) radial nach außen über die Mantelfläche (105) vorsteht, an dem ein Stoßende oder beide Stoßenden des Kolbenrings anliegen oder in Anlage bringbar sind.

14. Vorrichtung nach einem der Ansprüche 1 bis 13, wobei an der unteren Stirnseite (108) mindestens ein Dauermagnet (166) angeordnet ist zum Kraftschluss zwischen der unteren Stirnseite und einer ferromagnetischen Standfläche.

15. Verfahren zur Befüllung eines Bestückungsautomaten zur Bestückung eines Kolbens einer Brennkraftmaschine mit Kolbenringen, umfassend:
Zuführen eines Stapels von Kolbenringen (102) von einer oberen Stirnseite (106) eines zylindrischen Grundkörpers (104), so dass eine Mantelfläche (105) des zylindrischen Grundkörpers (104) innerhalb des Stapels koaxial mit den Kolbenringen (102) angeordnet ist;
Positionieren mindestens eines Stegs (118), der in radialer Richtung zum zylindrischen Grundkörper (104) zwischen einer Beladungsstellung und einer Entladungsstellung beweglich ist, in der Beladungsstellung, in welcher der Steg (118) mit einer Rückhaltefläche (120) über die Mantelfläche (105) radial auskragt, an welcher der Stapel koaxialer Kolbenringe (102) anliegt;
Einführen des zylindrischen Grundkörpers (104) mit den daran koaxial gestapelten Kolbenringen (102) in eine Zuführungseinrichtung (114) des Bestückungsautomaten, wobei ein an der Zuführungseinrichtung angeordneter Dorn (116) in axialer Richtung entlang einer Nut (112) in der Mantelfläche (105) läuft zur verdrehsicheren Aufnahme der Kolbenringe (102); und
Bewegen des Stegs in die Entladungsstellung, in welcher die Rückhaltefläche (120) des Stegs (118) radial innerhalb der Mantelfläche (105) angeordnet ist.

## Claims

1. An apparatus (100) for filling a fitting machine for fitting a piston of an internal combustion engine with piston rings (102), comprising:
a cylindrical main body (104) with a circumferential face (105), an upper end side (106) and a lower end side (108) which lies opposite the upper end side (106), a diameter (110) of the circumferential face (105) being smaller than an internal diameter of the piston rings (102) in order to receive coaxially stacked piston rings (102) which are fed in from the upper end side (106) along a longitudinal direction of the cylindrical main body (104) ;
a groove (112) in the circumferential face (105), which groove (112) extends in the axial direction of the cylindrical main body, in order to receive a mandrel (116) such that it cannot rotate, which mandrel (116) is arranged in a feeding device (114) of the fitting machine; and
at least one web (118) which can be moved in the radial direction with respect to the cylindrical main body (104) between a loading position and an unloading position, the at least one web (118) projecting radially beyond the circumferential face (105) in the loading position by way of a retaining face (120), against which the coaxially stacked piston rings (102) bear or can be brought to bear, and the retaining face (120) being arranged radially inside the circumferential face (105) in the unloading position.

2. The apparatus according to Claim 1, the at least one web (118) being arranged closer in the axial direction to the lower end side (108) than to the upper end side (106) .

3. The apparatus according to Claim 2, each web (118) being coupled to in each case one end clamping element (134) which extends in the axial direction in a lower region of the circumferential face, is arranged radially inside the circumferential face in the unloading position, protrudes from the circumferential face in the loading position, and determines an end transverse dimension which is greater than or equal to the internal diameter of the piston rings for receiving the piston rings in the lower region such that they cannot rotate.

4. The apparatus according to one of Claims 1 to 3, an operating element (128) being arranged on the upper end side (106), which operating element (128) is coupled to the at least one web (118), in order to bring about the movement of the web between the loading position and the unloading position.

5. The apparatus according to one of Claims 1 to 4, the operating element (128) comprising a rotary knob which is coupled in a rotationally movable manner to a converter (152) via a shaft (150) which runs in the longitudinal direction within the main body, and the converter (152) being operatively connected to the at least one web (118) for the radial movement of the web between the loading position and the unloading position.

6. The apparatus according to either of Claims 4 and 5, the at least one web (118) being prestressed in the radial direction to the inside and bearing against a sliding face of the converter (152), which sliding face runs around the longitudinal axis.

7. The apparatus according to Claim 5 or 6, the converter (152) having a first circumferential sliding face with a first radial stroke which corresponds to a first overhang of the retaining face (120) in the loading position and a second circumferential sliding face with a second radial stroke which corresponds to a second overhang of the retaining face (120) in the loading position, and the operating element (128) comprising, furthermore, a lever which selectively moves the at least one web (118) into operative connection with the first sliding face and the second sliding face.

8. The apparatus according to one of Claims 1 to 7, comprising, furthermore, a clamping element (130) which extends in the axial direction along the circumferential face between the upper end side (106) and the lower end side (108), the clamping element being arranged radially inside the circumferential face in a loose position, and the clamping element protruding from the circumferential face (105) in a loose position and determining a transverse dimension which is greater than or equal to the internal diameter of the piston rings which are received or are to be received, for receiving the piston rings such that they cannot rotate.

9. The apparatus according to Claim 8, the clamping element (130) being arranged diametrically opposite the groove (112) with regard to the cylindrical main body (104) .

10. The apparatus according to one of Claims 1 to 9, comprising, furthermore, at least one permanent magnet which is arranged in the main body (104) such that it can be moved in the radial direction between a first position and a second position which lies radially outside the first position, a magnetic flux density which is caused by the permanent magnet on the circumferential face (105) being greater in the second position than in the first position, and being capable of bringing about a non-positive connection between the piston rings and the circumferential face.

11. The apparatus according to one of Claims 1 to 10, comprising, furthermore, a shoe (138) which is arranged on the upper end side (106) such that it can be moved in a pivoting manner between a cutting position and a rest position, the shoe comprising a cutting blade (140) which is concealed in an inaccessible manner in the rest position and projects beyond the circumferential face (105) in the radial direction in the cutting position on the upper end side.

12. The apparatus according to Claim 11, the cutting blade (140) being arranged inside the groove (112) or above the groove in the axial direction in the cutting position.

13. The apparatus according to one of Claims 1 to 12, in each case one stop (144A; 144B; 144C) projecting radially to the outside beyond the circumferential face (105) on one groove cheek or on the two groove cheeks of the groove (112), against which stop (144A; 144B; 144C) one abutting end or the two abutting ends of the piston ring bear or can be brought to bear.

14. The apparatus according to one of Claims 1 to 13, at least one permanent magnet (166) being arranged on the lower end side (108) for the non-positive connection between the lower end side and a ferromagnetic standing surface.

15. A method for filling a fitting machine for fitting a piston of an internal combustion engine with piston rings, comprising:
feeding in of a stack of piston rings (102) from an upper end side (106) of a cylindrical main body (104), with the result that a circumferential face (105) of the cylindrical main body (104) is arranged inside the stack coaxially with the piston rings (102);
positioning of at least one web (118), which can be moved in the radial direction with respect to the cylindrical main body (104) between a loading position and an unloading position, in the loading position, in which the web (118) projects radially by way of a retaining face (120) beyond the circumferential face (105), against which the stack of coaxial piston rings (102) bears;
introducing of the cylindrical main body (104) with the piston rings (102) which are stacked coaxially on it into a feeding device (114) of the fitting machine, a mandrel (116) which is arranged on the feeding device running in the axial direction along a groove (112) in the circumferential face (105) in order to receive the piston rings (102) such that they cannot rotate; and
moving of the web into the unloading position, in which the retaining face (120) of the web (118) is arranged radially inside the circumferential face (105).

## Revendications

1. Dispositif (100) pour le remplissage d'un automate de garnissage pour le garnissage d'un piston d'un moteur à combustion interne avec des segments de piston (102), comprenant :
un corps de base cylindrique (104) avec une surface d'enveloppe (105), un côté frontal supérieur (106) et un côté frontal inférieur (108) opposé au côté frontal supérieur (106), un diamètre (110) de la surface d'enveloppe (105) étant inférieur à un diamètre intérieur des segments de piston (102) pour recevoir des segments de piston (102) empilés coaxialement, acheminés depuis le côté frontal supérieur (106), le long d'une direction longitudinale du corps de base cylindrique (104) ;
une rainure (112) s'étendant dans la direction axiale du corps de base cylindrique dans la surface d'enveloppe (105), de manière à recevoir, de manière fixée en rotation, un mandrin (116) disposé dans un dispositif d'alimentation (114) de l'automate de garnissage ; et
au moins une nervure (118) qui est déplaçable dans la direction radiale par rapport au corps de base cylindrique (104) entre une position de chargement et une position de déchargement, l'au moins une nervure (118), dans la position de chargement, faisant saillie radialement au-delà de la surface d'enveloppe (105) avec une surface de retenue (120) au niveau de laquelle s'appliquent ou peuvent être amenés en appui les segments de piston (102) empilés coaxialement, et dans la position de déchargement, la surface de retenue (120) étant disposée radialement à l'intérieur de la surface d'enveloppe (105).

2. Dispositif selon la revendication 1, dans lequel l'au moins une nervure (118) est disposée dans la direction axiale plus près du côté frontal inférieur (108) que du côté frontal supérieur (106) .

3. Dispositif selon la revendication 2, dans lequel chaque nervure (118) est accouplée à chaque fois à un élément de serrage d'extrémité (134) qui s'étend dans une région inférieure de la surface d'enveloppe dans la direction axiale, et qui, dans la position de déchargement, est disposé radialement à l'intérieur de la surface d'enveloppe, et qui, dans la position de chargement, fait saillie hors de la surface d'enveloppe et définit une dimension transversale d'extrémité qui est supérieure ou égale au diamètre intérieur des segments de piston, afin de recevoir de manière fixée en rotation les segments de piston dans la région inférieure.

4. Dispositif selon l'une quelconque des revendications 1 à 3, dans lequel, au niveau du côté frontal supérieur (106), est disposé un élément de commande (128) qui est accouplé avec l'au moins une nervure (118) afin de provoquer le déplacement de la nervure entre la position de chargement et la position de déchargement.

5. Dispositif selon l'une quelconque des revendications 1 à 4, dans lequel l'élément de commande (128) comprend un bouton tournant qui est accouplé à un convertisseur (152) de manière déplaçable en rotation par le biais d'un arbre (150) s'étendant à l'intérieur du corps de base dans la direction longitudinale et le convertisseur (152) étant en liaison fonctionnelle avec l'au moins une nervure (118) en vue du déplacement radial de la nervure entre la position de chargement et la position de déchargement.

6. Dispositif selon l'une quelconque des revendications 4 ou 5, dans lequel l'au moins une nervure (118) est précontrainte vers l'intérieur dans la direction radiale et s'applique contre une surface de glissement du convertisseur (152) dont la circonférence entoure l'axe longitudinal.

7. Dispositif selon la revendication 5 ou 6, dans lequel le convertisseur (152) présente une première surface de glissement périphérique avec une première course radiale qui correspond à un premier dépassement de la surface de retenue (120) dans la position de chargement, et une deuxième surface de glissement périphérique avec une deuxième course radiale qui correspond à un deuxième dépassement de la surface de retenue (120) dans la position de chargement, et dans lequel l'élément de commande (128) comprend en outre un levier qui met en liaison fonctionnelle l'au moins une nervure (118) de manière sélective avec la première surface de glissement et la deuxième surface de glissement.

8. Dispositif selon l'une quelconque des revendications 1 à 7, comprenant en outre un élément de serrage (130) qui s'étend dans la direction axiale le long de la surface d'enveloppe entre le côté frontal supérieur (106) et le côté frontal inférieur (108), l'élément de serrage étant disposé dans une position de libération radialement à l'intérieur de la surface d'enveloppe, et l'élément de serrage, dans une position de libération, faisant saillie hors de la surface d'enveloppe (105) et définissant une dimension transversale qui est supérieure ou égale au diamètre intérieur des segments de piston reçus ou à recevoir, afin de recevoir les segments de piston de manière fixée en rotation.

9. Dispositif selon la revendication 8, dans lequel l'élément de serrage (130) est disposé diamétralement à l'opposé de la rainure (112) par rapport au corps de base cylindrique (104).

10. Dispositif selon l'une quelconque des revendications 1 à 9, comprenant en outre un aimant permanent qui est disposé dans le corps de base (104) de manière déplaçable dans la direction radiale entre une première position et une deuxième position située radialement à l'extérieur de la première position, et une densité de flux magnétique engendrée par l'aimant permanent au niveau de la surface d'enveloppe (105) étant plus importante dans la deuxième position que dans la première position et permettant de réaliser une liaison par engagement par force entre les segments de piston et la surface d'enveloppe.

11. Dispositif selon l'une quelconque des revendications 1 à 10, comprenant en outre un sabot (138) disposé de manière pivotante au niveau du côté frontal supérieur (106) entre une position de coupe et une position de repos, le sabot comprenant une lame de coupe (140) qui est recouverte de manière inaccessible dans la position de repos et qui fait saillie au-delà de la surface d'enveloppe (105) dans la direction radiale dans la position de coupe au niveau du côté frontal supérieur.

12. Dispositif selon la revendication 11, dans lequel la lame de coupe (140) est disposée dans la position de coupe à l'intérieur de la rainure (112) ou dans la direction axiale au-dessus de la rainure.

13. Dispositif selon l'une quelconque des revendications 1 à 12, dans lequel, au niveau d'une paroi de rainure ou des deux parois de rainure de la rainure (112) à chaque fois une butée (144A ; 144B ; 144C) fait saillie radialement vers l'extérieur au-delà de la surface d'enveloppe (105), au niveau de laquelle butée s'applique(nt) ou peu(ven)t être amenée(s) en appui une extrémité de butée ou les deux extrémités de butée du segment de piston.

14. Dispositif selon l'une quelconque des revendications 1 à 13, dans lequel au moins un aimant permanent (166) est disposé au niveau du côté frontal inférieur (108) pour réaliser un engagement par force entre le côté frontal inférieur et une surface d'appui ferromagnétique.

15. Procédé pour le remplissage un automate de garnissage pour le garnissage d'un piston d'un moteur à combustion interne avec des segments de piston, comprenant :
l'acheminement d'une pile de segments de piston (102) depuis un côté frontal supérieur (106) d'un corps de base cylindrique (104), de telle sorte qu'une surface d'enveloppe (105) du corps de base cylindrique (104) soit disposée à l'intérieur de la pile coaxialement avec les segments de piston (102) ;
le positionnement d'au moins une nervure (118), qui est déplaçable dans la direction radiale par rapport au corps de base cylindrique (104) entre une position de chargement et une position de déchargement, , dans la position de chargement dans laquelle la nervure (118) fait saillie radialement avec une surface de retenue (120) au-delà de la surface d'enveloppe (105) au niveau de laquelle s'applique la pile de segments de pistons coaxiaux (102) ;
l'introduction du corps de base cylindrique (104) avec les segments de piston (102) empilés coaxialement sur celui-ci dans un dispositif d'alimentation (114) de l'automate de garnissage, un mandrin (116) disposé au niveau du dispositif d'alimentation étant mobile dans la direction axiale le long d'une rainure (112) dans la surface d'enveloppe (105) afin de recevoir les segments de piston (102) de manière fixée en rotation ; et
le déplacement de la nervure dans la position de déchargement dans laquelle la surface de retenue (120) de la nervure (118) est disposée radialement à l'intérieur de la surface d'enveloppe (105).
